# EUROPEAN PATENT APPLICATION

(11) **EP 4 559 803 A1**
(43) Date of publication of application: **28.05.2025**
(21) Application number: 23211492.6
(22) Date of filing: 22.11.2023
(51) Int. Cl.: B64C 1/06

(54) **AIRCRAFT INTERIOR LINING ARRANGEMENT, INSTALLATION METHOD, DECORATIVE LINING, JIG AND MANUFACTURING METHOD**

(71) Applicant: Airbus Operations GmbH, 21129 Hamburg (DE)
(72) Inventor: Roth, Ingo, 21129 Hamburg (DE)

(57) **Abstract**

Disclosed is an aircraft interior lining arrangement wherein a front face facing towards the interior is covered by a decorative cover which is tensed over the front face and fixed only locally, thereby keeping its flexibility after the fixation, an installation method, a decorative cover, a manufacturing jig and a manufacturing method for such decorative cover.

## Description

The present invention refers to an alternative aircraft interior lining arrangement, to an installation method for an interior lining arrangement, to a decorative cover for an aircraft interior lining arrangement, to a jig for manufacturing such decorative cover and to a manufacturing method for manufacturing such decorative cover.

An aircraft interior lining arrangement of an aircraft cabin comprises a plurality of individual interior panels, such as side panels, ceiling panels or dado panels. The arrangement forms a cabin-side boundary of a space present between the interior lining arrangement and an aircraft structure. The space is used as an installation space for a large number of components, such as thermal insulation, electrical lines, air or water-conducting lines or other components of the aircraft. Furthermore, the arrangement serves for a visual design of the aircraft cabin.

Due to installation reasons, a longitudinal gap is formed between mutually adjacent interior panels. As the gap extends from the cabin interior to the installation space, a gap cover is provided adapted to close the gap. According to a known solution, a strip is provided in guiding means on the backside of the panels. During installation, the stripe is pushed over its entire length in the guiding means. Finally, the gap is closed, but still visible from the cabin-side. However, pushing the strip forward in guiding means on the backside of the panels is difficult from an installation point of view and time consuming. Further on, in order to create a uniform visual design, the gaps need to be adjusted to a single width.

It is an object of the present invention to provide an alternative aircraft interior lining arrangement, enabling a simplified installation and a compensation in minor faults in alignments. It is a further object of the invention to provide a simplified installation method for an interior lining arrangement and a decorative cover which is easy to install.

It is a further object of the invention to provide a jig for manufacturing a decorative cover for an aircraft interior lining arrangement, and to provide a manufacturing method for manufacturing a decorative cover of an aircraft lining arrangement.

The object is achieved by an aircraft interior lining arrangement with the features of claim 1, by an installation method with the features of claim 6, by a decorative cover with the features of claim 10, by a jig with the features of claim 11 and by a manufacturing method with the features of claim 12. Advantageous embodiments are disclosed in the dependent claims, the description and the figures.

According to the invention, an aircraft interior lining arrangement comprises at least one interior panel lining an interior of an aircraft, wherein a front face facing towards the interior is covered by a decorative cover which is tensed over the front face. According to the invention, the cover is only fixed at some regions (locally) at the interior panel. The cover maintains its flexibility between the fixation points, thus enabling relative movements between the cover and the at least one interior panel. Preferably, the cover is fixed at least at edge regions of the interior lining.

Preferably, the cover is stretchable (elastically, flexible). During the tensioning, the cover is deformed elastically. However, this elastic deformation occurs in such a slight manner that compared to an uninstalled cover the elastic deformation (stretching) over the front face is visible not detectable. Due to the tensioning, the cover can show a different route than the curvature of the at least one interior panel. For instance, if the interior panel has concave front face, the installed cover will show a straight, plane shape, without any bending, curve and the like. Due to this, there will be areas between the front face and the cover without any direct contact between them, such that cavities are created. If the cover is touched in such area, based on its flexibility and tensioning force, it would yield (move locally backwards) in this area.

Every cover can be adapted to an individual extension (number, length and high) of the arranged interior panels in advance, then stored or transported in folded or rolled up manner until it is time for installation in the aircraft.

Exemplary kind of fixation methods are clamping or bonding. An exemplary cover is a textile such as a polyester-based textile. Basically, the cover is not limited to a specific material. The main characteristics are flexibility such as a fabric and that it fulfils fire protection and other safety driven aviation requirements. Preferably, it is a knitted fabric. The tension is applied by the fixation, by the curvature of the interior panels and by the geometry of the meshes. The textile can also be coated on its surface facing towards the interior with a further material due to create a smooth effect. However, also alternative stretchable materials are applicable, such as plastic foils.

If several interior panels are arranged adjacent to each other, the cover extends over their gaps between them. This enables a gapless (seamless) appearance of the lining area for instance a sidewall area. The cover can extend over all interior panels between monuments and/or doors. Further on, as the gaps are covered by the inventive cover, gap tolerances can be ignored, this simplifying the installation of the interior lining. Special gap covers are not required.

In Addition, the cover can be replaced easily just by losing the fixations. There is no need to deinstall the interior panels themselves in order to change the decoration. In particular, if the cover is fixed mechanically, the fixation means can be reused and/or the cover can be divided up into its single components supporting sustainability if it not used any longer.

As the interior panels do not need to be deinstalled for replacing the cover, installed seats need also not to be deinstalled, they can stay inside the cabin.

Furthermore, impacts on the interior panels caused by passengers and their luggage, for instance, can be reduced by the tension of the decorative cover.

In one embodiment, two holding systems are provided adapted to hold the cover in circumferential direction of the aircraft. Each holding system has at least one holding element and at least one corresponding counter-element. The holding elements can be positioned at opposite edge regions of the interior panel and the counter-elements can be positioned at opposite edges of the cover. Exemplary holding elements are slotted guide rails and exemplary counter-elements are sliding bodies, which engage in a form-fit manner with the guide rails. If the holding means are positioned in longitudinal direction top and bottom at the interior panels and the cover, the cover can be installed by pushing it from one side to the other side over the front face.

In order to fix the cover in a second direction preferably, at least two clamping systems are provided. Each clamping system has at least one clamping element and at least one corresponding receiving element. The receiving elements can be positioned at opposite edge regions of the interior panel, wherein the clamping elements could clamp the cover inside the receiving elements or vice versa. A preferred clamping element is a longitudinal elastically element such that is can be bend or laid up in curves, and a preferred receiving element is a longitudinal groove which is inserted in side edges of the interior panels and which is adapted to receive an area of the cover and the clamping element. The clamping systems are preferably used laterally at the interior panel (left and right sides).

In order to enable an installation of the cover at interior panels with window openings, a cutout in the cover can be provided, wherein a shaping system can be provided adapted to keep the desired shape of a cutout prior to installation. By means of the shaping systems the cover can easily be positioned in alignment with the window openings. In one embodiment, the shaping system is based on mechanical clamping, similar the laterally clamping systems. The cover is inserted in a circular groove of a ring-shaped element and clamped inside the circular groove via an elastically element. However, the shaping system can also be based on bonding or on stitching.

Preferably, the shaping systems will be covered by a frame element which is clamped inside the window opening.

By means of providing at least one fixation system at a cover area between its upper and lower edges, changes curvatures of an interior panel can be taken into account. Preferably, the fixation system comprises at least one fixation part and at least one corresponding receiving part. The receiving part is positioned on the front face of the interior panel and the fixation part fixes the cover inside the counter-part. An exemplary fixation part are sliding bodies and an exemplary counter-part is a slotted guide rail, similar to the holding systems.

According to an inventive installation method for installing an interior lining arrangement in an aircraft, at least one interior panel of the lining arrangement is provided. A decorative cover adapted to cover a front face of the at least one interior panel is also provided. Then, the cover is tensioned over the front face of the at least one interior panel. After that, the tensioned cover is fixed, for instance at edge regions of the interior lining.

The inventive installation methods enables and easy and fast installation of the cover at installed interior panels.

The installation effort can further be reduced, if the cover comprises a pre-shaped cutouts for windows openings, wherein each pre-shaped cutout is aligned to a corresponding window opening and then fixed via a frame element in the window opening.

In particular, multiple interior panels are arranged together forming the front surface. By tensioning the cover over several interior panels, gaps between them are hidden.

According to the invention, a decorative cover for an aircraft interior lining arrangement is adapted to be tensioned over a front face of an interior panel of an aircraft interior lining arrangement.

According to the invention, a Jig for manufacturing a decorative cover of an aircraft lining arrangement according to one of the preceding, comprises a base for receiving a decorative cover, wherein on opposite base sides engagement elements are provided adapted to hold the cover in a plane. An upper surface of the base represents a contour of a front face of an aircraft lining arrangement. Further on, the jig has at least one pressing device which is adapted to deform a cover area representing a window opening of an interior panel, at least one mounting device for applying a shaping system in the area of the recess which are adapted to keep the reached deformation, and at least one cutting device for making a cutout corresponding to the window opening.

Such jig enables and easy manufacturing of a required decorative cover.

According to an inventive manufacturing method for manufacturing a decorative cover of an aircraft lining arrangement, a decorative cover is provided. Then, the counter-elements of a holding system are fixed at opposite edges of the cover. After that, the cover is positioned in a jig, wherein the cover is held in a plane via an engagement of its counter-elements in corresponding engagement elements of the jig. After the cover is hold in position, the cover is locally deformed by applying a pressure on a cover area determined to receive a window cutout. Then, a shaping system is attached to the cover in order to keep the deformed shape of the cover area. After that, the cutouts are cut and the cover is realised from the jig with the installed counter-elements and the at least one installed shaping system.

Thereby, the cutouts can be brought in simultaneously or one after the other. If they are made simultaneously more than one pressing devices, more than one shaping installation devices and more than cutting device are required. If the cutouts are made sequentially, only one pressing device, one shaping systems installation device and one cutting device is required.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Figure 1: a frontside view of an inventive aircraft interior lining arrangement;
- Figure 2: a front side view of an arranged side wall panels of the lining arrangement;
- Figure 3: a front side view of a decorative cover of the lining arrangement;
- Figure 4: a perspective view of a frame element for a window opening of the lining arrangement;
- Figure 5: a cross sectional view of the lining arrangement;
- Figure 6: a ring-shaped element of a shaping systems to keep the shape of a cutout in the cover in shape prior to installation;
- Figure 7: a clamping element of the shaping system;
- Figure 8: a cross-section of a window opening with an installed frame element;
- Figure 9: a front side view of the lining arrangement with installed frame element;
- Figure 10: a perspective side view of a side wall panel;
- Figure 11: the cover with attached upper and lower counter-elements of a holding systems;
- Figure 12: an upper portion of the side view of a side wall panel with a cover hold in place by the holding means;
- Figure 13: a clamping element of a lateral clamping system;
- Figure 14: a perspective side view of a side wall panel with cover held in place by the clamping system;
- Figure 15: an alternative receiving element of a clamping element and its rear positioning of a lateral clamping system;
- Figure 16: a top view of the alternative receiving element;
- Figures 17 and 18: steps of an installation method if a curvature of a side wall panel varies; and
- Figures 19 to 24: a jig and steps manufacturing method to manufacture the cover.

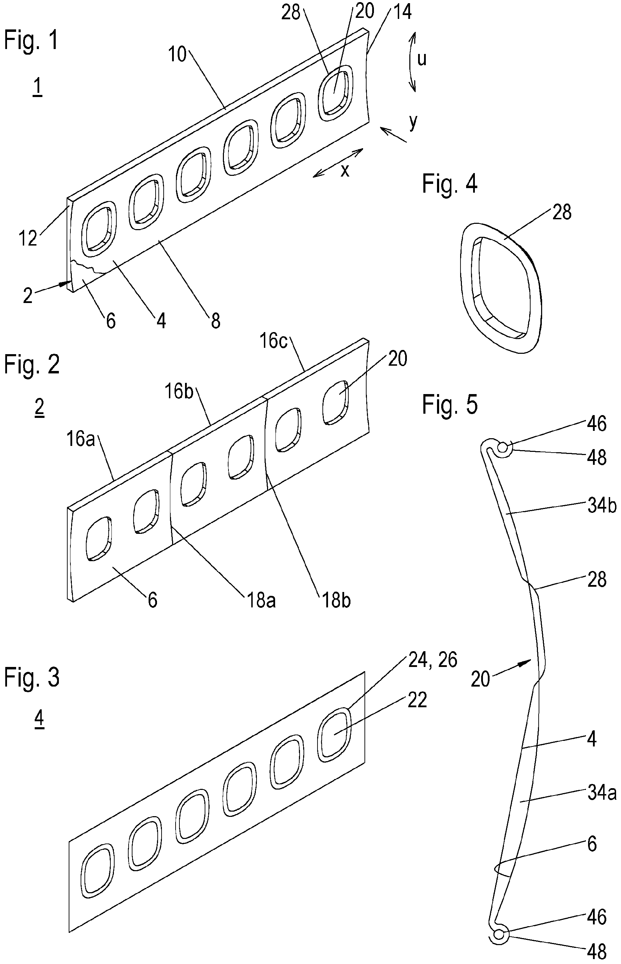

In Figure 1 a preferred embodiment of an inventive aircraft interior lining arrangement 1 is shown. The exemplary arrangement 1 comprises an interior panel arrangement 2, in particular here a side panel arrangement, and a decorative cover 4 covering the side panel arrangement 2 on its front face 6 facing towards an interior of aircraft cabin. The side panel arrangement 2 extends between monuments and /or doors. The decorative cover is tensioned over the front face 6 and fixed at edge regions 8, 10, 12, 14 of the side panel arrangement 2.

As can be seen in Figure 2, the side panel arrangement 2 comprises a plurality of mutual adjacent side panels 16a, 16b, 16c. Between the side panels 16a, 16b, 16c, gaps 18a, 18b are provided which are covered by the decorative cover 4. Each side panel 16a, 16b, 16c has window openings 20.

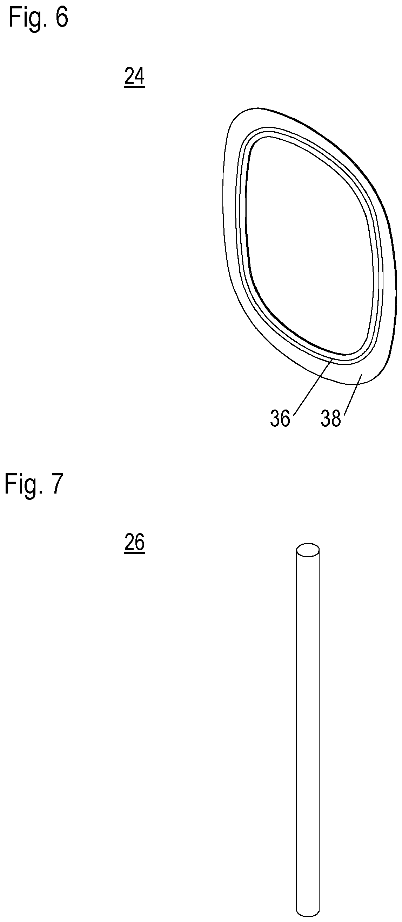

With reference to Figure 3, the decorative element 4 is a sheet-like and stretchable element. Preferably, it is a textile made of a material meeting aviation requirements. It comprises a plurality of cutouts 22 which correspondent regarding their number, size and position to the window openings 20. In order to maintain a shape of the cutouts 20 even if the cover 4 is not tensioned over the front face 6, each cutout 22 is equipped with a shaping system 24, 26, which will be descripted in more detail in Figure 6 to 9.

In Figure 4, a frame element 28 is shown. The frame element 28 is inserted through the cutouts 22 into the window openings 20. The frame element 28 has a ring-like shape with a flange 30 hiding the shaping system 24, 26 and an axial projection 32 extending in the window opening 20 if installed.

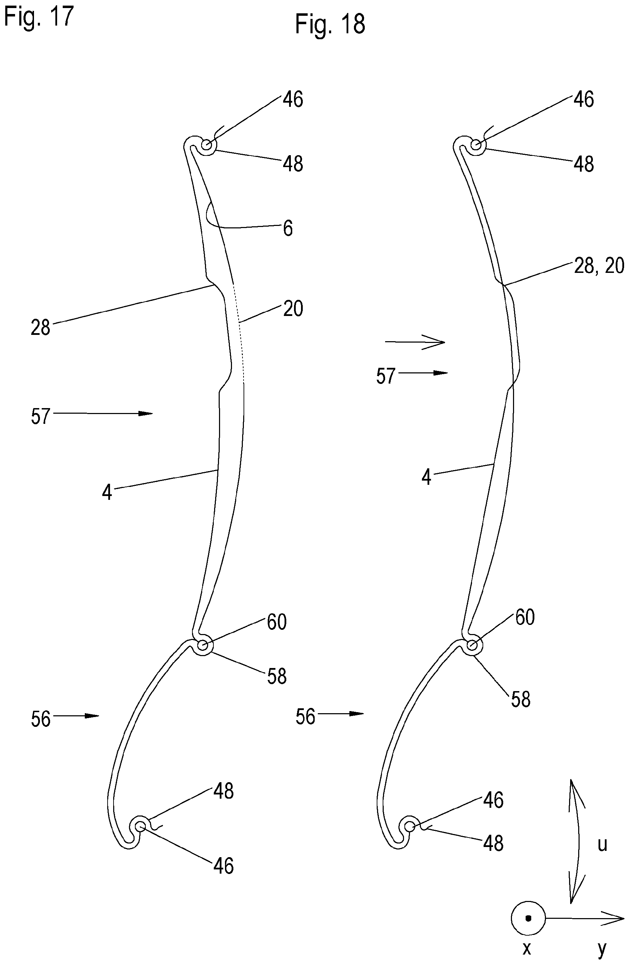

As shown in Figure 5, the frame element 28 fixes the cover 4 to the side panel arrangement 2 (to each side panel 16a, 16b, 16c) at the window openings 20. Due to the tensioning of the cover 4 over the front face 6 and no extensive fixation (bonding) between the inventive fixation points, the cover 4 does not follow a concave curvature of the side panel arrangement 2. The cover 4 routes along the shortest way between its fixation points which is a straight line (plane). As a consequence, the cover 4 is spaced apart from the front face 6 between the fixation points such that in some areas cavities 34a, 34b are created between the front face 6 and the cover 4. However, if the side panel arrangement 2 has a convex curvature, the cover follows the curvature directly, as illustrated in Figure 17 and 18 regarding an integrated dado panel.

As shown in Figures 6 and 7, the shaping means comprises a ring-shaped part 24 and a clamping part 26. The ring shape part 24 has a ring groove 36 on its front 38 and is adapted to receive the cover 4 and the clamping part 26. The clamping part 26 is in this example cylindrically shaped and can be put via elastic deformation in the groove 36, thereby clamping the cover 4 inside.

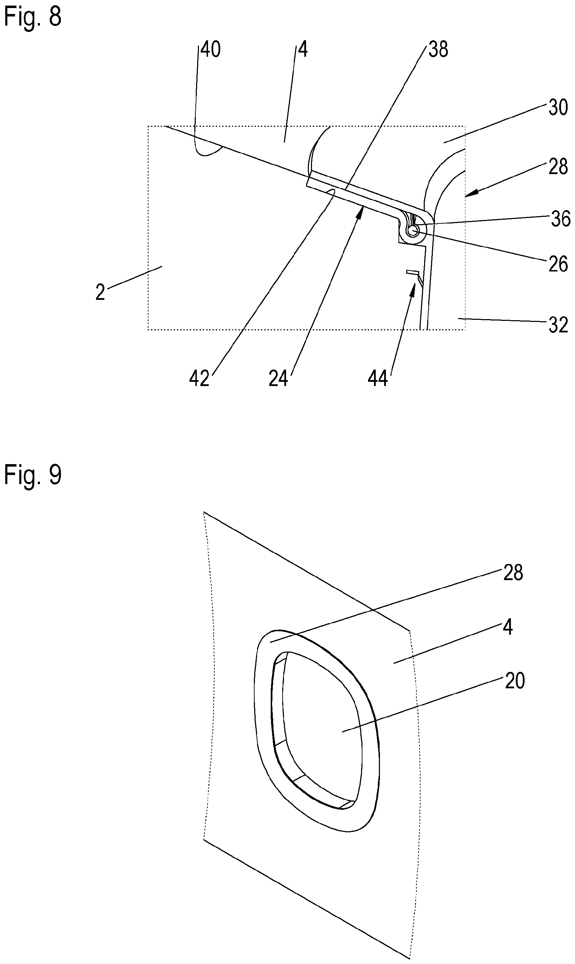

When attached to the cover 4, the ring-shaped part 24 is on the back 40 of the cover 4 (Figure 8), whereas the clamping part 26 is positioned on the front and holds the cover 4 inside the groove 36.

As shown in Figure 8, in an installed state, the ring-shape part 24 rests in a front face 6 recess 42 of the side panel arrangement 2 surrounding a window opening 20. The flange 30 of the frame element 28 touches the front of the cover 4 and extends over the shaping system 24, 26 radially. The projection 32 reaches inside the window opening 20. The fixation of the frame element 28 inside the window opening 20 is done by several snap-and click connections 44 of the projection 32.

Figure 9 is attached for the sake of completeness, illustration that the shape system is not visible if the cover is installed as it is covered by the frame element. It should be noted, that the shaping means, in particular its groove, can also be an integral part of the frame element.

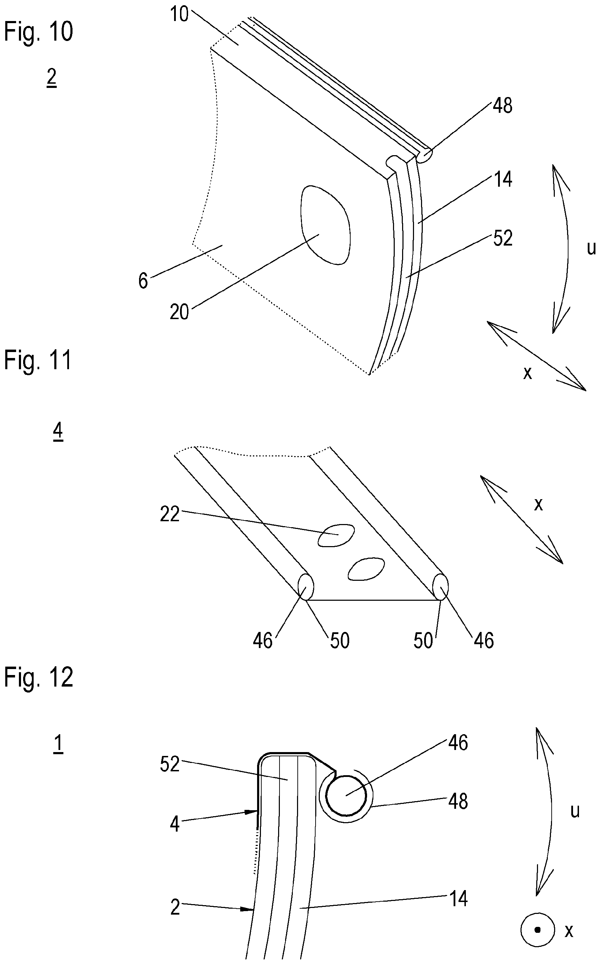

In Figures 10 to 12 the fixation of the cover 4 at the upper edge region 10 and the lower edge region 8 is shown. For this purpose, a holding system is provided at each edge regions 8, 10. The holding system comprises a holding element 46 and a corresponding counter-element 48.

In this example, each holding element 46 is a slotted guide rail attached to the back of the side panel arrangement 2. The counter-element 48 are sliding bodies, such as sliding balls in a chain-like manner, which are attached to the cover 4 at its longitudinal edges 50, for instance via stitching. The counter-element 48 can be inserted in the holding element 46 by a sliding movement, whereas the cover extends through the slot. When the cover 4 is pushed inside at the top and at the bottom, the cover 4 is prepared to be pre-tensioned in a first direction x.

Further illustrated in Figure 10 is a receiving element 52 of a clamping system pre-tensioning the cover 4 in the first direction x (longitudinal direction of the aircraft). The receiving element 52 is a longitudinal groove at a side face (lateral edge region, 12, 14) of the side panel arrangement 2. It is provided at both its lateral sides 12, 14, i.e. on the left edge region 12 and on the right edge region 14.

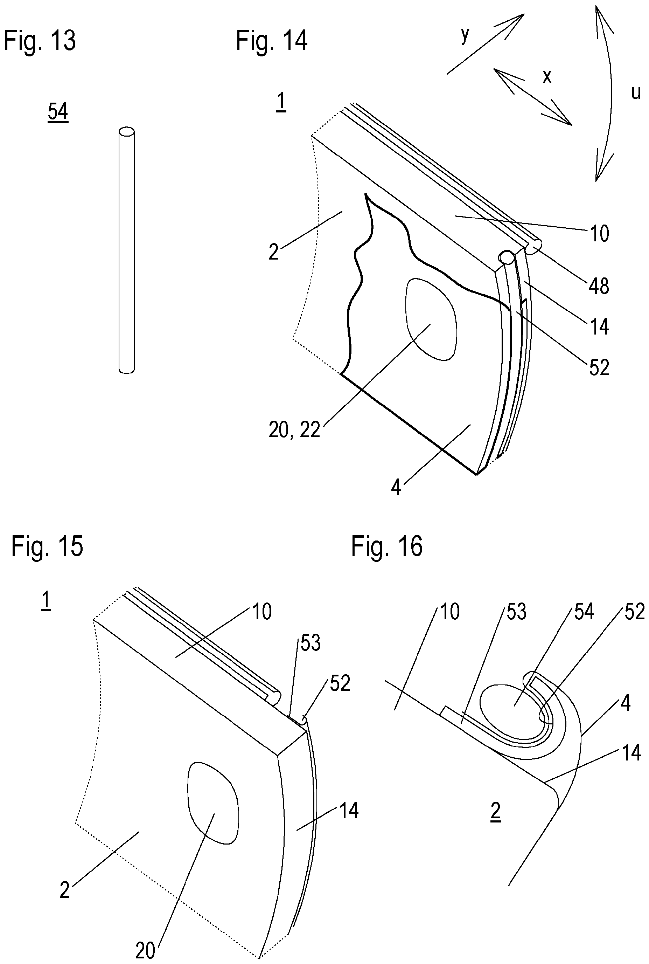

The clamping system further comprises a clamping element 54 shown in Figure 13. The clamping element 54 is in this example cylindrically shaped and can be inserted into the receiving element 54 (groove) via elastic deformation and clamping the cover 4 inside, as illustrated in Figure 14. The groove extends in circumferential direction u. In this embodiment, the function of the clamping system 52, 54 is similar, respectively identical, to the function principle of the shaping systems 24, 26. Both systems 24, 26 and 52, 54 rely on a mechanical clamping force. However, their function principle can be also different. For instance, it is assumable to fix the cover 4 at its lateral sides (left and right edge regions 12, 14) by nails or rivets.

In Figures 15 and 16, an alternative receiving element 52 and its positioning on the interior panel 2 is shown. Contrary to the receiving element 52 described above, the groove-like receiving element 52 shown in figures 15 and 16 is positioned on the back 40 of the interior panel 2 in its edge regions 12, 14. It can be provided as a separate part 53 of the interior panel 2 as shown here or as an integral part of the interior panel 2. The groove 52 extends over the entire height of the interior panel 2. The clamping force is applied by a clamping element 54 as described before; An lateral end portion of the cover 4 is inserted into the groove 54 and fixed inside by the clamping element 54.

According to an inventive installation method, a side panel arrangement 2 is provided. A decorative cover 4 adapted to cover a front face 6 of the side wall panel arrangement 2 is also provided. This means, cutouts 22 have been made in the cover 4 and are held in shape by shaping systems 24 ,26. Additionally, the sliding bodies 46 (holding elements) of the holding systems are attached at the upper and lower edge 50 of the cover 4.

First, the sliding bodies 46 are inserted into the guide rails 48 (receiving element) simultaneously at the upper edge region 10 and at the lower edge region 8 in the first direction x (longitudinal direction of the aircraft). During the sliding movement, no tension force is acting on the cover 4. The cover 4 is relaxed.

Second, the cover 4 is pre-tensioned in the first direction by pressing the cover 4 laterally inside the lateral grooves 52 and fixing them via the clamping elements 54.

Third, the frame elements 14 are attached in a second direction y, which is perpendicular or nearly perpendicular to the first direction x. As a consequence, a tension is applied on the cover 4 in circumferential direction u and in longitudinal direction x of the aircraft (see figure 1). The final tension (tension in longitudinal direction x and tension in circumferential direction u) acting on the cover 4 is finally adjusted by the
attachment/installation of the last frame element 28.

In Figures 17 and 18, the side panel arrangement 2 comprises not only a concave curvature, but also a lower convex curvature 56. The convex contour 56 represents a dado panel which, in this embodiment, has been integrated in the side panel 16a,16b, 16c. In order to give the cover 4 the desired shape, a fixation system is provided.

The fixation system is positioned in the transfer region of the curvatures. It is orientated parallel to the holding elements 46 and based in the shown embodiment on the same principle. This means, the fixation system has a longitudinal receiving part 58 such as a slotted guide rail and a fixation part 60 such as sliding bodies. The guide rail 58 is integrated in the front face 6 of the side panel arrangement 2 and the sliding bodies are attached to the back of the cover 4. From the front, the sliding bodies 60 are not visible.

An installation method is similar to the installation method descripted above. The only difference is that the cover 4 is not only hold at its upper and lower longitudinal edges regions 8, 10, but also in an area between them via the fixation system 58, 60. During the insertion, the cover 4 is relaxed in both areas, in a lower convex dado-panel-like area 56 and in a pre-descripted upper concave area 57. The pre-tension in the first direction x in both areas 56, 57 is applied by clamping the cover 4 laterally via a clamping system 52, 54.

The final tension in longitudinal direction x and in circumferential direction u of the aircraft in both areas 56, 57 is applied by positioning the frame elements 28 inside the window openings 20.

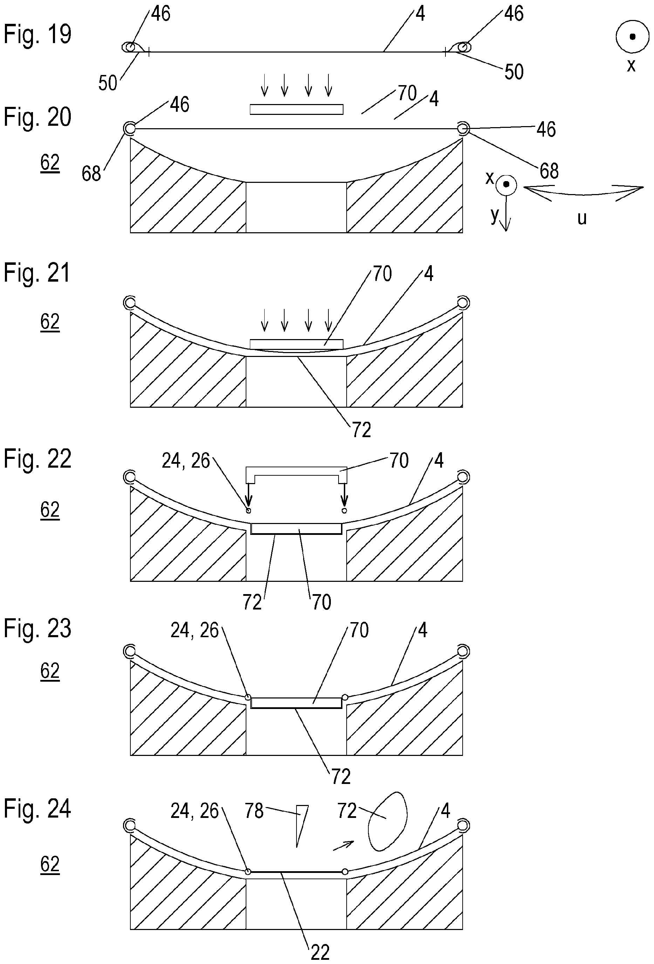

In Figures 19 to 24 a manufacturing method of a decorative cover 4 and a jig 62 for executing the manufacturing method is shown.

The jig 62 has a base 64 with an upper surface 66 following the curvature of front face 6 of a side panel arrangement 2 to be covered. Laterally at the base 64, on both opposite sides an engagement element 68 is provided (Figure 20). The engagement elements 68 correspond to the holding elements 46 of the holding systems. Exemplary engagement elements 68 are slotted guide rails.

Further on, at least one pressing device 70 is provided which is adapted to deform a cover area 72 representing a window opening 20 (Figures 20 to 23). The window opening 20 is simulated by a recess 72 in the upper surface 66 of the base 64.

In order to attach s shaping system 24, 16 to the cover 4 in the area of the recess 74, at least one mounting device 76 is provided (Figure 22, 23).

Further on, the jig 62 comprises at least one cutting device 78 which is adapted to bring a respective cutout 22 in the area of the recess 74 (Figure 24).

According to an inventive manufacturing method for manufacturing a decorative cover 4, a cover 4 is adjusted regarding its extension in the first direction x (longitudinal direction of the aircraft) and in circumferential direction u of the aircraft. The cover 4 can be an endless textile with a given width that is cut at its desired length.

After the cover 4 has been adjusted regarding its extension, the sliding bodies 46 of a holding system are attached at opposite edges 50 of the cover 4 (Figure 19). Then, the cover 4 is positioned in the jig 62, wherein the cover 4 is held in a plane via an engagement of its sliding bodies 46 in the engagement elements 68 of the jig 62 (Figures 22). After that, the cover 4 is locally deformed by applying a pressure on a cover area 72 determined to receive a window cutout 22 (Figures 19 to 21). Thereby, the cover 4 is deformed only up to that extent that corresponds to the tension in its installed state on an interior panel 2. Thus, an overload (over-deforming, over-tensioning) acting on the cover 4 when positioned in the jig 62 is prevented. The pressure is upheld (Figure 23) and the shaping system 24, 26 is installed in order to maintain the deformed shape of the respective cover area (Figure 24). Then, the pressing device 70 is retracted and the cutout 22 is made by the cutting device 78 (Figure 24). Finally, the cover 4 is released from the jig 62 with the installed sliding bodies 46 of the holding systems and the installed shaping system 24, 26.

It should be noted that other holding means, clamping means and/or fixation means are applicable, falling in the scope of the invention. For instance, guide rails can be provided on the cover, whereas the sliding bodies are attached to the side panels. Further on, other mechanical form fit principles than rails and
sliding bodies are possible, for instance principles based on hooks, nails or rivets. Furthermore, the invention is not limited to side wall panels, the invention covers also ceiling linings, for instance.

Disclosed is an aircraft interior lining arrangement wherein a front face facing towards the interior is covered by a decorative cover which is tensed over the front face and fixed only locally, thereby keeping its flexibility after the fixation, an installation method, a decorative cover, a manufacturing jig and a manufacturing method for such decorative cover.

### Reference list

- 1: aircraft interior lining arrangement
- 2: side panel arrangement
- 4: decorative cover
- 6: front face
- 8: lower edge region
- 10: upper edge region
- 12: left edge region
- 14: right edge region
- 16a, b, c: side panel (interior panel)
- 18a, b: gap
- 20: window opening
- 22: cutout
- 24: ring-shaped part (of shaping system)
- 26: clamping part (of shaping system)
- 28: frame element
- 30: flange
- 32: projection
- 34a, b: cavity
- 36: groove (of ring-shaped part)
- 38: front
- 40: back
- 42: recess
- 44: snap-and click connections
- 46: holding element (sliding bodies of the holding system)
- 48: receiving element (guide rails of the holding system)
- 50: longitudinal edge of the cover (upper and lower edge)
- 52: receiving element (lateral groove of clamping system)
- 53: separate part, forming the receiving element
- 54: clamping element (of the clamping system)
- 56: convex curvature area (dado-panel-like area)
- 57: concave curvature area
- 58: receiving part (guide rail of the fixation system)
- 60: fixation part (sliding bodies of the fixation system)
- 62: jig
- 64: base
- 66: upper surface
- 68: engagement element
- 70: pressing device
- 72: area to be cut out
- 74: recess (jig)
- 76: mounting device
- 78: cutting device

- x: first direction (longitudinal direction)
- y: second direction
- u: circumferential direction

## Claims

1. An aircraft interior lining arrangement (1), comprising at least one interior panel (16a, 16b, 16c) lining an interior of an aircraft, wherein a front face (6) facing towards the interior is covered by a decorative cover (4) which is tensed over the front face (6).

2. The aircraft interior lining arrangement (1) according to claim 1, wherein holding systems are provided having at least one holding element (46) and at least one corresponding counter-element (48), wherein the holding elements (46) are positioned at opposite edge regions (8, 10) of the at least one interior panel (16a, 16b, 16c) and the counter-elements are positioned at opposite edges (50) of the cover (4) or vice versa.

3. The aircraft interior lining arrangement (1) according to claims 1 or 2, wherein clamping systems are provided having at least one clamping element (54) and at least one corresponding receiving element (52), wherein the receiving elements (52) are positioned at opposite edge regions (12, 14) of the at least one interior panel (16a, 16b, 16c) and the clamping elements (54) clamp the cover (4) inside the receiving elements (52) or vice versa.

4. The aircraft interior lining arrangement (1) according to claims 1, 2 or 3, wherein at each window opening (20) of the at least one interior panel (16a, 16b, 16c) a cutout (22) in the cover (4) is provided, wherein a shaping system (24, 26) is provided adapted to keep a desired shape of a cutout (22) prior to installation.

5. The aircraft interior lining arrangement (1) according to claim 4, wherein each shaping system (24, 26) is covered by a frame element (28) clamped inside the window opening (20).

6. The aircraft interior lining arrangement (1) according to any of the preceding claims, wherein at least one fixation system is provided having at least one receiving part (58) and at least one corresponding fixation part (60), wherein the receiving part (58) is positioned on the front face (6) of the at least one interior panel (16a, 16b, 16c) and the fixation part (60) fixes the cover (4) inside the receiving part (58).

7. An installation method for installing an interior lining arrangement (1) in an aircraft, comprising the steps:
• Providing at least one interior panel (16a, 16b, 16c) of the lining arrangement (1);
• Providing a decorative cover (4) adapted to cover a front face (6) of the at least one interior panel (16a, 16b, 16c);
• Tensioning the cover (4) over the front face (6); and
• Fixing the tensioned cover.

8. The installation method according to claim 7, comprising the steps:
• aligning a pre-shaped cutout (22) of the cover (4) to a corresponding window opening (20) of the at least one interior panel (16a, 16b, 16c); and
• fixing the pre-shaped cutout (22) via a frame element (28) in the window opening (22).

9. The installation method according to claim 7 or 8, wherein multiple interior panels (16a, 16b, 16c) are arranged together forming one front surface (6).

10. A decorative cover for an aircraft interior lining arrangement (1) adapted to be tensioned over a front face (6) of an interior panel (2) of the aircraft interior lining arrangement (1).

11. A jig (62) for manufacturing a decorative cover (4) according to claim 10 or of an aircraft lining arrangement (1) according to one of the preceding claims 6, comprising:
• a base (64) for receiving a decorative cover (4), wherein on opposite base sides engagement elements (68) are provided adapted to hold the cover (4) in a plane, representing a contour of a front face of an aircraft lining arrangement (1);
• at least one pressing device (70) adapted to deform a cover area (72) representing a window opening (20) of an interior panel (16a, 16b, 16c);
• at least one mounting device (76) for applying a shaping system (24, 26) adapted to keep the reached deformation; and
• at least one cutting device (78) for making a cutout (22) corresponding to the window opening (20).

12. A manufacturing method for manufacturing a decorative cover (4) according to claim 6 or according to one of the preceding claims 1 to 10, comprising the steps:
• providing a decorative cover (4);
• installing counter-elements (46) of a holding system at opposite edges (50) of the cover (4);
• positioning the cover (4) in a jig (62), wherein the cover (4) is held in a plane via an engagement of its counter-elements (46) in corresponding engagement elements (68) of the jig (62);
• deforming the cover locally by applying a pressure force on a cover area (72) determined to receive a window cutout (22);
• installing a shaping system (24, 26) in order to keep the deformed shape of the cover area (72);
• inserting the cutout (22); and
• releasing the cover (4) from the jig (62) with the installed counter-elements (46) and the installed shaping system (24, 26) .
